Europäisches Patentamt

European Patent Office

Office européen des brevets

(19)

(11) **EP 1 094 951 B1**

(12) **EUROPEAN PATENT SPECIFICATION**

(45) Date of publication and mention
of the grant of the patent:
**10.03.2004 Bulletin 2004/11**

(51) Int Cl.⁷: **B41M 3/00**, B41M 3/14,
B42D 15/00, B42D 15/10,
B41M 5/38

(21) Application number: **99957040.1**

(22) Date of filing: **09.06.1999**

(86) International application number:
**PCT/GB1999/001825**

(87) International publication number:
**WO 1999/065699 (23.12.1999 Gazette 1999/51)**

(54) **METHODS OF PROVIDING IMAGES ON SUBSTRATES AND SECURITY DOCUMENT**

VERFAHREN ZUR BILDERZEUGUNG AUF SUBSTRATEN UND SICHERHEITSDOKUMENT

REALISATION D'IMAGES SUR DES SUBSTRATS ET DOCUMENT DE SECURITE

(84) Designated Contracting States:
**AT BE CH CY DE DK ES FI FR GB GR IE IT LI LU
MC NL PT SE**
Designated Extension States:
**LT LV SI**

(30) Priority: **18.06.1998 GB 9813205**

(43) Date of publication of application:
**02.05.2001 Bulletin 2001/18**

(73) Proprietor: **De La Rue International Limited
Basingstoke, Hampshire RG22 4BS (GB)**

(72) Inventors:
• **HARRIS, Paul, Gregory
Middlesex HA4 8QN (GB)**
• **RAMPLING, Marc, Robin
Torpoint, Cornwall PL11 3NQ (GB)**
• **WALLIS, Richard, Alastair
London W7 3BJ (GB)**
• **KAY, Ralph
Basingstoke RG24 8RQ (GB)**

(74) Representative: **Skone James, Robert Edmund
GILL JENNINGS & EVERY
Broadgate House
7 Eldon Street
London EC2M 7LH (GB)**

(56) References cited:
EP-A- 0 657 309       WO-A-92/16378
WO-A-95/31337        US-A- 4 352 706
US-A- 5 248 544       US-A- 5 594 484

**Description**

The invention relates to methods of providing an optically variable effect generating structure and an image on a substrate.

Optically variable effect generating structures such as diffraction gratings and holograms are frequently used both for decorative and security purposes. In particular, such structures are used on security documents such as identification cards, banknotes and the like to enable such substrates to be authenticated. Traditionally, in view of the delicate nature of these structures, a transfer process has been used to locate the structure on the substrate. This involves fabricating the structure on a carrier film and then transferring the structure using a hot stamping technique or the like onto the substrate. An example is described in US-A-4913504. Other transfer processes, although not suited for optically variable effect generating structures, are described in US-A-5017255, US-A-5219655, US-A-5328534 and WO-A-95/15266.

WO-A-97/03844 describes a method of providing a reflective security feature on security paper in which a metal is sprayed onto the surface of the paper following which it is crushed, burnished or otherwise treated to convert it to a more specularly reflective surface and this may be formed into a relief pattern. The techniques for providing the metal include electric arc, flame and plasma spraying techniques, all of which have the disadvantage of requiring high temperature processing. Other problems of such spraying include the fact that sprayed metals tend to fuse into continuous deposits which do not bend with the substrate and therefore disbond, it is very difficult to control the thickness of the deposit, it is very difficult to achieve complex shapes, and the number of materials which can be deposited is limited.

WO-A-95/31337, EP-A-0657309 and US-A-5594484 disclose methods of providing an image on a substrate comprising providing an adhesive on the substrate in a pattern corresponding to an image; and depositing a metal powder on the adhesive.

US-A-4352706 describes how a valuable document is protected from counterfeiting by applying an extremely thin layer of metal to the document of predetermined locations.

TW 318782 A describes a photographic technique for generating a structure which is subsequently embossed and in particular describes the use of a copper plate coated with a photosensitive emulsion. A negative is placed on the copper plate and is exposed so that the image on the negative is formed on the copper plate.

In accordance with the present invention, a method of providing an optically variable effect generating structure on a substrate comprises:

a) providing an adhesive on the substrate;
b) depositing a metal powder on the adhesive; and,
c) embossing an optically variable effect generating structure into the metal powder.

We have devised a completely novel technique for providing optically variable effect generating structures on a substrate. This is achieved by first providing an adhesive on the substrate. This is preferably an adhesive with tack or capable of generating tack on thermal or other treatment used at correct weight so as to bind only one layer of metal powder. The adhesive enables the subsequently deposited metal powder to be strongly adhered to the substrate and the pattern of deposit to be closely controlled in contrast to previous approaches. Also, the amount of powder bonded relates to the adhesive thickness. As will be explained below, this has particular advantages in the case of security documents.

The invention also involves embossing an optically variable effect generating structure into the metal powder. Previous proposals have not involved embossing such structures which require very fine relief elements to be generated. However, the invention results in a structure which can easily be used for authentication purposes and is very difficult to copy.

Typically, the metal powder will be deposited in a discontinuous form, for example as a single layer of metal particles in regions or islands. If this is subsequently crushed, it will appear to give a continuous layer when rolled out to produce "platelets".

Although the invention can be used with holograms and diffraction gratings, the description will refer, for simplicity, to holograms only.

Preferably, the method further comprises subsequent to step b), crushing the deposited metal powder to form a mirror finish. This crushing or polishing step could be carried out separately or as part of the embossing step. However, there are advantages in maintaining the two steps separate so as to prolong the life of the embossing member or shim.

Any suitable metal powder can be used but where a crushing process is involved, the powder should preferably be chosen so as to be relatively soft, or able to be softened by processing e.g. heating. If it is not, then the amount of force necessary to crush it destroys the structure of the substrate. Preferably, the material is also reasonably chemically inert so that it can be handled easily and must resist crumpling etc. It should not tarnish after depositing and should retain a lustrous appearance for the lifetime of the product. A material which satisfies all these requirements is tin. However, other materials such as indium, lead, cadmium and thallium could also be used although some of these may be unacceptably toxic or expensive. A further benefit of tin is that it has a low melting point and so heating to just below its melting point, for example 200°C, causes the material to soften further quite substantially. Other metal powders could be used, particularly with non-fibrous or non-porous surface substrates or where fine definition is not required.

Tin powders are normally prepared using either water, inert gas or ultrasonic atomising processes. Of these, the ultrasonic approach produces the best quality product in terms of sphericity of the particles which has a marked effect on the flow properties of the powder. In general, a range of particle sizes is produced from <1μm up to 100μm depending on the process used.

The first stage in the process involves the deposition of an adhesive. The adhesive must be printable, preferably to form high resolution images. Drying characteristics are also important: it must either remain tacky for long enough so that the powder can be deposited onto it and adhere (this may be, depending on line speed etc. ˜ 1s) or alternatively, it could dry immediately but be capable of being reactivated, for example, by heating.

It is possible to use UV cationic curing resins. Here the printed areas are irradiated and develop tack before cure. This can allow powder bonding whilst curing continues to completion, preferably with the use of some heat.

The quantity of adhesive applied is also important. Too little and incomplete coverage may occur. Too much and the adhesive will pass between the first layer of tin particles and bind additional layers, resulting in unnecessary material usage.

From the point of view of adhesive strength it would be best if the adhesive wetted the sides of the particles to some extent, for example to 1/2 their radius. This not only provides a reasonable area of contact, but is also because all applied forces would then always act in a mixture of shear and tensile modes, rather than in pure tensile mode (which is normally by far the weakest situation).

An adhesive thickness of ˜5μm appears a reasonable compromise of these factors, although because of the many factors involved this will vary to account for different adhesives, papers, printing methods etc.

The adhesive may be printed using conventional printing techniques such as flexography and intaglio printing but a particularly advantageous approach, particularly where an image is to be generated, is xerography where the adhesive comprises a toner. Using the xerographic approach it is possible to bind tin powders using resin coverage of only 0.25mg/cm$^2$ (and this includes the weight of the pigment). Good results can be obtained for many purposes e.g. cheques, especially with a good UV cured top, protective coat.

Unlike deposits formed from conventional printing processes, microscopic examination of those formed from xerographic processes indicates that the resin only contacts a very small area of each particle and as a result the powders are only loosely held and can be easily displaced. After rolling they bind much more firmly and are able to resist rubbing/bending etc reasonably even before top-coating.

The preferred powder is produced ultrasonically, although other powders can be used.

A variety of methods may be used to deposit the metal powder. A preferred approach is dusting the powder although other techniques such as a fluidised bed and the like could be used. It may also be useful to vibrate the substrate during the depositing step to move the particles around on the surface so as to ensure complete coverage. Typically, the method will further comprise removing any excess powder.

The technology to apply a powder, and then remove the excess material is already in use in the thermography technique, and there is commercial equipment available capable of handling ˜10,000 sheets per hour. Other techniques include firing powder upwards, particularly with dense metal powders.

Where excess powder is to be removed, this must be done efficiently. In one case, this is accomplished by suction. The excess powder is then passed into a cyclone classifying unit which removes any dust/paper fibres etc that may have sucked up with the tin, before returning the recycled material via an air-lock system to a powder hopper for reuse.

It is possible to improve the efficiency of the excess powder removal process (if necessary) by, for example, using a more powerful suction system, or by inverting the paper so that gravity is operational. The use of vibration to dislodge entrained particles is also helpful.

The substrate can be chosen from a wide variety of known materials including both rag paper and the like and plastics materials such as 10μm Mylar PET. Materials which we have used successfully include standard banknote paper, banknote paper with a bar watermark, Astralux paper, other coated papers, standard photocopier paper 80g/m$^2$, silicone release paper and polyester films, OPP (oriented polypropylene) and other filmic materials having thicknesses in the range 10-100 μm.

The metal powder such as tin is able to deform so as to accommodate the microscopic roughness of the paper surface, but is not able to deform sufficiently to nullify variations in paper thickness which are normally on a much larger scale (e.g ˜1-2mm). Such undulations can only be accommodated by applying pressure from a nip roller to compress the microstructures of the paper or by applying pressure to the underside of the paper using a flexible medium which will deform to accommodate the thickness variations.

Given that this is the case, using papers with good thickness uniformity is likely to be helpful, although virtually any paper (or solid surface) can be used.

It is also possible to use this method to provide holograms onto plastic foils, and we have successfully provided them onto foils with thicknesses in the range 10-100$\mu$m.

If silicone release paper is used, after a hologram is formed, the hologram remains attached to the embossing shim and can be removed and transferred intact to another substrate such as PET using an adhesive. Thus, it is possible to develop an "off-set" technique for depositing holograms onto heat and pressure sensitive substrates, e.g. tamper evident shrink sleeves.

In the preferred methods, once the powder has been attached to the surface of the paper it must be crushed so as to convert it into a mirror, and micro-embossed with the holographic image. This can be accomplished using a single operation or using a two stage process with an initial crushing/mirror formation followed by a micro-embossing stage where lower applied forces could possibly be used.

As a final step, a (optionally coloured) protective layer may be provided over the embossed powder. This protective layer prevents mechanical damage to the embossed surface in use and assists in preventing copying of the security features by sealing the embossed profile. In this latter context, it is preferable if the protective layer is formed by the same material as the adhesive or at least by very similar material so that any attempt to remove the protective layer will destroy the optically variable effect generating structure. It is worth noting that a key advantage of this approach is that the optically variable effect generating structure is not contained on a continuous film of material but as a mosaic of microscopic platelets. If the organic layer which holds them together is dissolved they simply break up, and the hologram can never be reformed. Hence provided the adhesive/protective layer formulations are chosen carefully the holograms should have better security than hot-stamped or flame sprayed fused metal ones.

Direct bonding of the protective layer to the adhesive/substrate via pores in the coating should also improve the mechanical stability of the deposits. Such pores occur naturally and can be deliberately introduced to any desired degree.

In order to provide the desired mechanical properties the material must be flexible and scratch resistant, as well as being able to pass the various chemical/solvent resistance approval tests required by the industry.

The best quality replay of optically variable effect images is obtained by depositing a continuous metallic coating. However, it is possible to obtain perfectly acceptable replay using much lower loadings e.g. 25-50% coverage, with the tin deposited, for example, in the form of lines or arrays of dots. This provides the ability to combine metallised images with pre-printed coloured images. It also provides a means of reducing costs by minimising materials usage.

It is relatively simple to achieve regularly spaced rows of lines (or dots) of metal powder, which provided they are sufficiently finely spaced are not obvious to the naked eye. If a transparency with lines of the same spacing is rotated over such an image then Moiré interference fringes are observed. It is possible using this technique to hide identifying features (numbers etc.) in the metallisation which only become evident when the fringes are formed. Such effects would be expensive to duplicate by other means, but add no significant additional cost to the present technique.

By over-coating the metallised layer(s) with (transparent) coloured lacquers a wide range of colours is obtainable, e.g. gold etc.

It is possible to alter the colour of the metal powder by simple oxidation or chemical treatment of the metal particle surface. Such coloured powders can be used to produce (mirror-finish) metallic deposits with a range of attractive colours from a gold through to an iridescent purple, which can be readily holographically embossed.

By mixing (tin) powders of different colours it is possible to produce speckled effects. Such effects can also be obtained by mixing (tin) powders with other materials, e.g. polymers, powders, pigments, fibres etc. Other entities, metallic and non-metallic, could be used in mixtures with tin, e.g.:

- Colours - inorganic/organic pigments/dyes.
- Luminescence - fluorescent or phosphorescent types.
- Magnetics - oxides, ores of different colours.
- Oxidised tin items.

The micro-embossed holographic features are impressed into the surface to a depth of less than 1$\mu$m. It is possible to form macro-embossed features on metallised paper by impressing patterns/images to a depth of ~0-5$\mu$m.

Another advantage of the powder approach is that it is easy to incorporate magnetic media into the deposits, which can be encoded with security information. This could be achieved by mixing the magnetic powders with the t in or incorporating them into the adhesive.

Fluorescent material can also be incorporated, by mixing the metal and fluorescent powders and co-depositing them.

Low-cost, hand-held eddy current devices are in use in a number of applications, such as coating thickness measurements or for differentiating between different metals. They work by using a small coil to induce eddy currents in the object. The magnitude and phase of the currents alters the reactance of the coil and this can be readily measured.

From an electrical standpoint the tin deposits are markedly different from hot-stamped foils or metallic paints. Hence it should be possible to design a device based on eddy-current measurements to verify authenticity.

The above list of features could be incorporated on their own or in combination with any (or possibly all) of the others into virtually any security printing application. In most cases, they do not require additional steps to be added to the basic process, and hence would contribute comparatively little to the unit costs of the process.

The basic process permits holograms of any size to be deposited on one or both sides of the paper. The latter may be accomplished either using a second pass or possibly using a single pass system. The holograms need not be continuous and could, for example, be located in various distant areas of a banknote, or forming a box around the periphery. It would be very expensive to do this using a hot-stamped foil. The cost would be proportional to the total area covered by tin and not (as in the case of hot-stamping) the total area enclosed by hologram.

An attractive feature of this technology is its ability to form metallised images, which may be holographically embossed. At present, this can only be achieved using expensive, multi-stage techniques such as de-metallisation. It is possible to form images using this technology because the tin powder will only stick to areas where adhesive has been applied.

The invention is applicable particularly to security documents which include banknotes, cheques (whether bank or travellers), bonds, share certificates, licences, some types of identity cards, smart cards, passports, visas tickets, passbooks, vouchers, deeds, tamper revealing seals and labels, brand authenticity labels and the like. Indeed, any security item based on a plastics material could be implemented using this invention. Of course, where a flexible item is required, such as a banknote, then suitable plastics materials should be chosen, for example polypropylene.

Some examples of methods according to the invention and apparatus for carrying out those methods will now be described with reference to the accompanying drawings, in which:-

Figure 1 is a schematic view of the apparatus;

Figures 2A and 2B illustrate a powdered paper before and after crushing, in cross-section about 500x-magnification;

Figures 3A and 3B show the surfaces of typical tin holograms at about x1000 magnification;

Figure 4 illustrates schematically the crushing rolls;

Figure 5 is a plot of Brinell hardness for tin vs temperature;

Figure 6 is a schematic cross-section through the finished product;

Figure 7 illustrates a range of unembossed metallised images indicating the effect of crushing/polishing with a polished metal shim;

Figures 8A-8C illustrate examples of metallised images on a banknote;

Figures 9A and 9B illustrate respectively six examples of original artwork and the same six after metallising and embossing with different densities of deposit; and,

Figure 10 illustrates schematically a macro-embossed product.

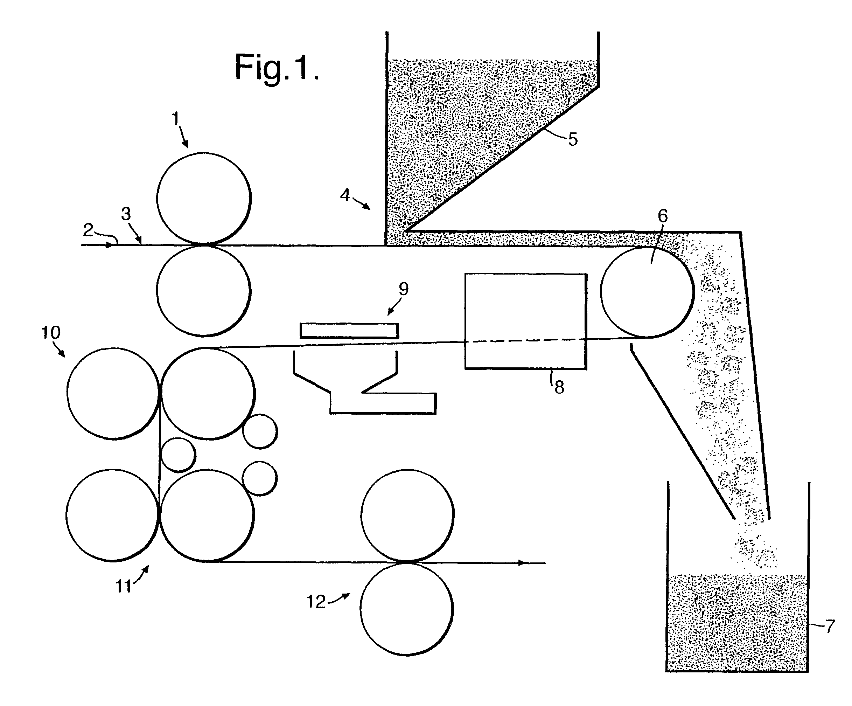

The apparatus shown in Figure 1 comprises an adhesive printing station 1 through which a paper web 2 is fed. Adhesive is printed onto the upper surface 3 of the web 2 either continuously or in the form of a pattern defining an image such as a half-tone image. As mentioned previously, this printing could use any conventional technique such as flexographic or intaglio or could comprise xerography. In the case of the adhesive being an ultraviolet cationic system, the web is then irradiated to initiate cure and develop tack. The printed web 2 then passes to a metal powder deposit station 4 including a hopper 5 containing a metal powder such as tin. The metal powder is deposited onto the upper surface 3 of the web and will adhere to the printed adhesive which is maintained in its adhesive condition. The web 2 is then folded around an idler roller 6 so that excess metal powder which is not adhered to the web will drop down into a recycle bin 7. This may be assisted by applying suction (not shown). The web then passes to a drying unit 8 which dries the adhesive and then passes to a further metal powder excess removal station 9 where the web is vibrated and suction is applied to draw off any remaining excess metal powder. The process can be stopped at this point, providing a master roll that can be calendered and embossed at a later date.

Otherwise, the web then passes to a crushing station 10 where the metal powder is crushed against the web 2 to form a mirror surface, the surface then being embossed with a microstructure defining an optically variable effect generating structure at an embossing station 11. Finally, the embossed web passes to a final printing station 12 at which a protective lacquer which may be the adhesive applied in the station 1 is applied over the embossed metal powder. The web then passes to a take-up station (not shown).

Therefore, the process can be continuous or discontinuous. The continuous process involves performing all sub-processes (i.e. adhesive printing, UV radiation (where required), metal deposition and removal, calendering and embossing, and finally overvarnishing) with no interruptions in the process line. The discontinuous process involves preparing a master roll as described previously. The subsequent steps (i.e. calendering, embossing and overvarnishing) are carried out off-line at a later date.

The powdering deposit station 4 needs to supply a continuous stream of powder which completely covers the area to be coated. No powder deposition system is perfect and therefore excess must be deposited so as to ensure there are no bare areas.

As an illustration of the type of deposition rates that may be required, to deposit a continuous band of powder 2mm thick, over a width of 1m at a line speed of 100m/minute would mean depositing ~200 litres of powder per minute (2 litres/minute/cm).

2mm of powder is clearly a large excess when coatings of <0.1mm thickness are required. If the diffuser is well designed it should be possible to reduce the deposit thickness to a much lower figure than this, which will minimise the quantity of powder in circulation.

Generally, the powder will not flow through the exit slit of the hopper 5 in a regular manner unless agitation is provided. Preferably, Faust equipment is provided which uses an asymmetric cam arrangement to vibrate the hopper at 25Hz. The powder bin has a total travel of $\pm$1mm. After passing through the slit the powder passes onto a diffuser (not shown) which consists of a flat plate angled at 20-30° to the horizontal into which staggered holes are drilled 2mm in diameter and 2mm apart. It is important from the point of view of deposit uniformity that flow rates and the arrangement of holes/angling of the diffuser is such that the powder passes down the plate and does not merely pass through the first one or two ranks of holes.

The tin drops a distance of 4-6cm onto the paper (depending on whether it falls through the top or bottom of the diffuser plate). As tin is a heavy material, the powder emerging from the diffuser holes tends to drop vertically, and the extent of merging of adjacent streams is very limited. The 25Hz shaking of the hopper contributes very little to improving uniformity of coverage. To ensure uniform coverage, it is important that the diffuser be designed so that the powder passes down the plate and emerges simultaneously from at least 3-4 ranks of (staggered) holes.

As it drops, it will of course accelerate and so the height determines the velocity of the particles when they strike the adhesive. The higher the impact velocity, the greater the initial penetration of the particles into the adhesive. Higher velocity may also cause the powder to be compacted and this may yield slightly improved coverage.

Increasing the height of the drop, however, may have the negative effect of making it more susceptible to the effects of drafts etc.

Using a 5mm x 10cm slit provided a tin flow rate of ~12kg/min, without overloading the diffuser. Assuming the density of the powder is 40% of that of the solid material, this equates to (i.e. 7.3 and 2.9 g/ml respectively) ~4.1 litres/min. At a line speed of 100m/min, this would provide a coating of only ~400µm.

Various approaches could be attempted to increase flow rates. The primary flow rate control mechanism is the slit and opening this wider would deliver more powder. More violent agitation might also help. Both of these remedies may require enlarging the diffuser plate. An alternative approach may be to have a multiple slit arrangement.

In addition to the conditions of agitation, slit width and back pressure of powder, the rate of flow also depends critically on the sphericity of the powder. The fewer misshapen particles present, the faster flow rates that can be achieved.

It is important to ensure that the powder is kept free of contaminants, such as oils or greases since relatively small quantities of such materials can have dramatic effects on flow rates, may be deleterious to adhesion and may cause contamination of the shim.

More than 90% of the powder deposited onto the web is not used immediately and must be collected and recirculated. During this process inevitably foreign material will be picked up. It is important that this material is removed, otherwise defects will be introduced into the deposits and damage to the shim is possible.

A cyclone arrangement (not shown) can be used for this purpose. This will remove the lighter material very effectively, but not the heavier contaminant particles. In the present case, it is very important that both types are removed. A combination of cyclone and filtration should be adequate. Filtering to pass only particles of e.g. <150µm should be adequate, but will tend to slow down throughput, unless the dimensions of the filter are substantially larger than those of the exit slit.

The collection head should ideally be situated as close to the powdering unit as possible. This will minimise the difficulties of transporting the tin powder back to the cyclone unit (as well as reducing the potential for spillages). As long as the distance involved is kept to a minimum, it should be possible to accomplish this using only the vacuum suction line, rather than having to resort to more elaborate mechanical techniques.

Table 1 below sets out a number of adhesives which have been successfully used.

Table 1

| VMCA (vinyl terpolymer) | - Union Carbide | - Solvent based |
| WB1808 (acrylic type adhesive) | - Bousfield Inks | - Water based |
| Mirage 4052 (oleoresinous varnish) | - Mirage Inks | - Air drying |

Table 1   (continued)

| MQ25418/1 (red cationic varnish) | - Mirage Inks | - UV cured |
|---|---|---|
| L16229 (clear cationic varnish) | - Mirage Inks | - UV cured |
| Epoxid 2227 (clear cationic adhesive) | - Delo®-Katiobond - | daylight cured |
| Xerographic Toner | | - thermoplastic powder |
| 3M Spray Mount | | - Proprietary |

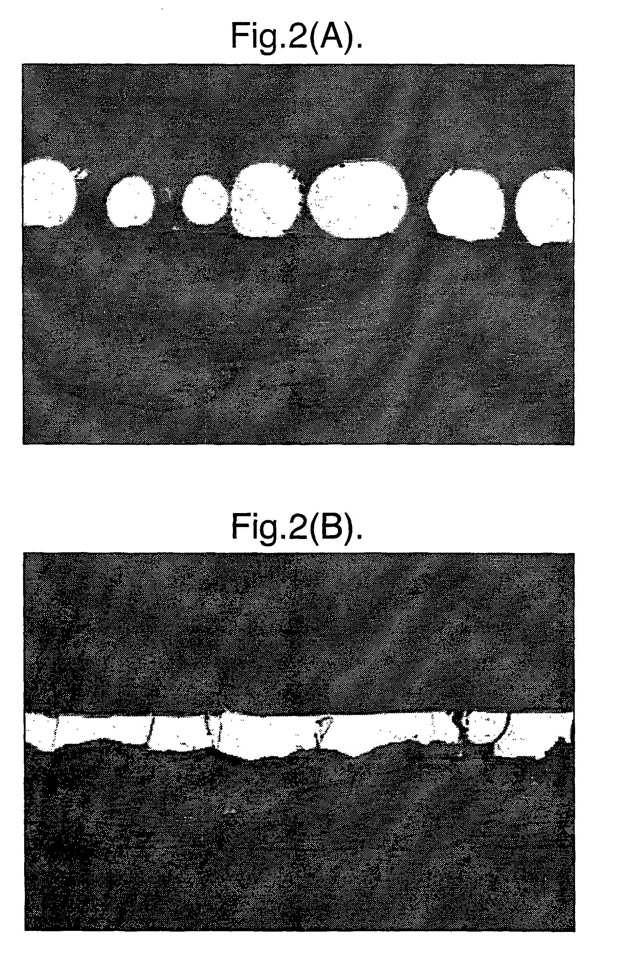

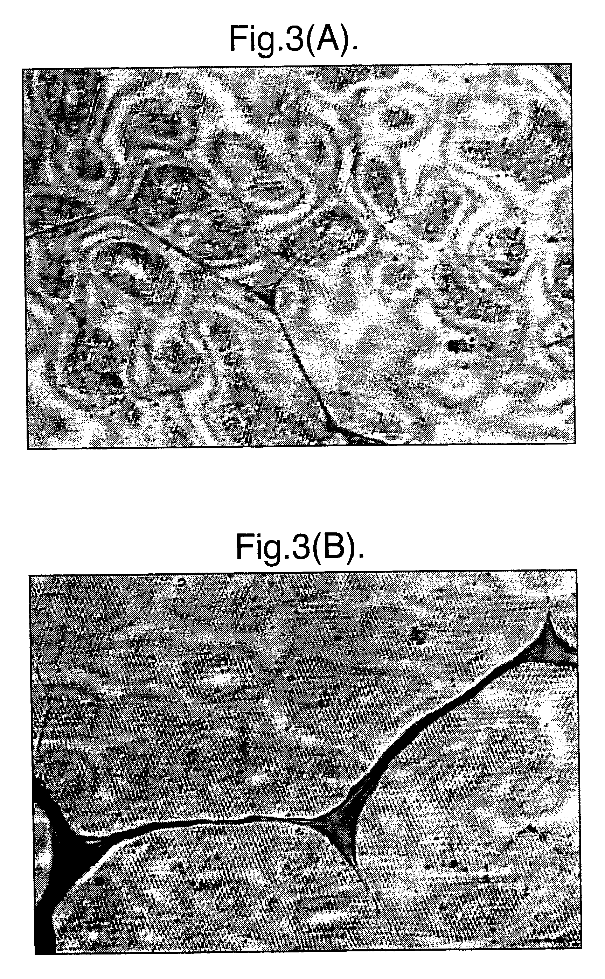

Figures 2A and 2B illustrate metal powdered coated substrates before and after crushing respectively while Figures 3A and 3B show the surface of a typical tin hologram. The individual tin grains are shown at 20. Also, Figures 3A and 3B show platelets formed by adjoining flattened 30-50µm spheres and not fused.

In order to understand the effect of the process variables during the crushing process, trials were conducted. It was found that at low pressures a substantial quantity of metal powder was transferred to the crushing roller, whereas at high pressures this was not the case. It appears that under high pressure the tin is forced to adopt the structure of the paper, and in so doing achieves a high level of mechanical keying. A much lower level of keying is obtained to the smooth surface of the crush roller, and so as the surfaces part the tin remains attached to the paper. At lower applied pressures less mechanical keying into the paper is obtained and when the surfaces part a more random distribution between the two is obtained. The use of optimised adhesive systems should also minimise transfer.

It was clear from the results obtained that the quality of the mirror finish obtained in the first stage has a direct effect on the quality of the final hologram. Imperfections introduced in the first stage are only partially removed in the second, unless very high embossing pressures are used.

The size distribution of the powder is also a factor which will influence the pressure required for mirror formation. As mentioned earlier, greater pressures were required to produce mirrors of comparable quality when finer powders were used.

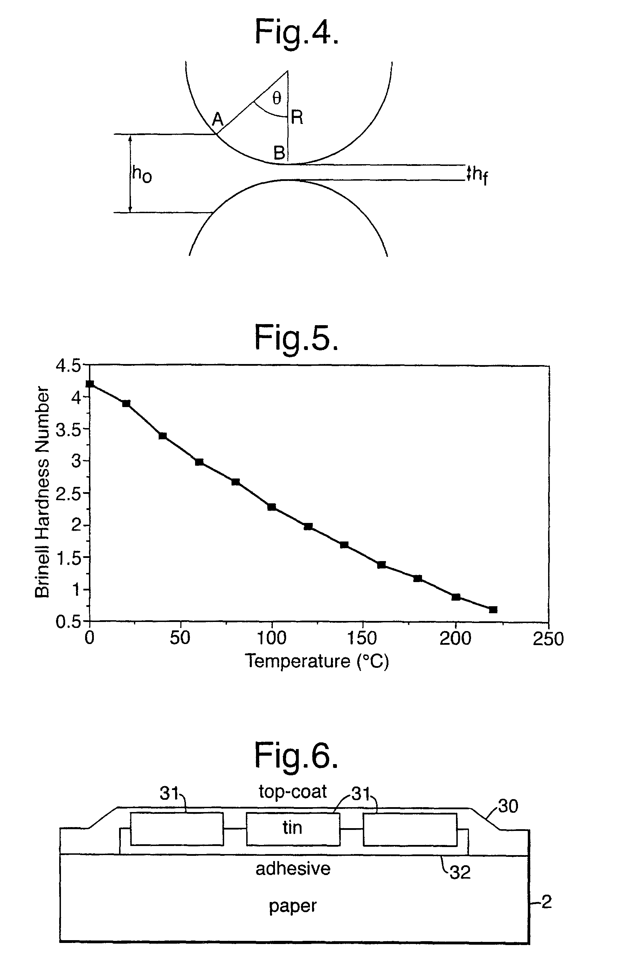

Another variable which affects the pressure required to form mirrors/micro-emboss a hologram is the diameter of the rolls, since this effects the width of the nip (crush zone) which is the area over which the load is shared. Figure 4 illustrates the situation. Knowing the maximum sheet thickness before and after crushing, and the dimensions of the rolls it is possible to calculate the area of the crush zone which is essentially the length of the arc A - B in Figure 4 (L) times the width of the specimen:

$$L = (R(h_o - h_f) - (h_c - h_f)^2/4 )^{1/2}$$

where R is the radius of the roll, and $h_o$ , $h_f$ are the original and final sheet thicknesses.

In this particular case the angle of bite ($\Theta$) is very small indeed, and the radial pressure is applied from almost directly above. This results in the particles spreading outwards equally in all directions, until they encounter material spreading in the other direction, rather than solely in the rolling direction.

At low pressures mirror formation only took place in thick areas of the sheet. Tin powder which had been deposited in thin areas of the sheet was virtually untouched. At higher pressures the tin/paper in thick areas was progressively crushed until their combined thickness was equal to that in thinner areas of the sheet, at which point they too began to be crushed so as to form a mirror surface. The uniformity of thickness of the paper is thus a key factor in determining the amount of pressure required to form a mirror finish.

Substantially lower pressures (e.g. ~ 25%) were required to hologram pure tin foils than powdered papers. The above observations suggest that the main obstacle to be overcome, and which necessitates the use of high rolling pressures, is flattening the paper so as to nullify thickness variations, rather than crushing the powder.

Pre-rolling to form a mirror finish did not significantly reduce the amount of pressure necessary to form a complete hologram. Instead, a similar sequence of events took place as before, with thick areas forming holograms first at low pressures, while the thinner areas required pressures of typically ~ 19685 kg/m (0.5tonnes/linear inch) before they were successfully embossed. It therefore appears that the compression achieved during the pre-rolling step occurred via an elastic process, and when the pressure was released the thickness variations returned (in part at least).

A possible method of combatting this effect and reducing the pressures required may be to use a rubber lined counter roll, which will deform to adjust to the variations in paper thickness. Preliminary experiments resulted in a flat top surface, with all of the thickness variations reporting as surface undulations on the underside.

Shim life is a key parameter in evaluating the overall costs of the process. There are a number of wear processes which have been identified and the precise nature of those which govern shim life is probably a complex function of all of them. Changing to a different material will change this process. Unfortunately, given the complexity of the situation, it is difficult to predict to what extent shim life would be effected from simple theoretical considerations.

In order to assess whether rapid shim wear was likely to be a problem, shims were attached to a top roller and a continuous loop of tin-coated paper was attached to a lower roller. After intervals of rolling, test strips were passed through the system to record the quality of the holographic images.

It was clear using unhardened shims or embossing rollers at room temperature that the quality of the holograms was noticeably worse after only ~ 100 operations. This was not due to wear on the surface, however, but rather the elongation of the shim itself under repeated rolling. The effect was probably exacerbated by the narrow width of the experimental roller (25mm), which would tend to enhance edge effects. Using a hardened shim cures this problem, with no obvious signs of wear or elongation after ~ 1000 operations. Hardened shims are used for e.g. high pressure credit card foil embossing. Further hardening can be used if required, e.g. nitriding.

Various ways of minimising this effect are possible. Firstly, in these experiments the maximum working pressure was used, sufficient to both mirror and emboss the surface simultaneously. Forming a mirror/embossing at a lower pressure against a rubberised counter roll should also permit significant reductions in the rolling pressure to be made.

Figure 5 shows a plot of Brinell hardness for tin vs temperature which were measured by measuring the size of an indentation formed by applying a standard force.

The relationship used to relate Brinell hardness to the size of indentation is given below:

$$\text{Brinell Hardness Number} = P/(\Pi D/2)(D-(D^2-d^2)^{1/2})$$

where P = load (kg), D = diameter of ball (mm), d = diameter of impression (mm).

Increasing the temperature of the embossing roll from 20 to 200°C reduces the force required to achieve an indentation of given size by a factor of four. Rolling at elevated temperatures would also have the effect of substantially reducing work hardening effects, particularly if the tin can be brought to greater than 100°C. Hence lower applied pressures could be used, and this together with the fact that the material is much softer should improve shim life.

To assess the effect of temperature on mirroring/embossing test strips were run at 200°C over the same range of pressures used in the room temperature experiments.

A very similar sequence of events occurred. At low pressures only the tin in thick areas of the sheet was crushed. Increasing the pressure increased the proportion of the surface which had been flattened. In general, the quality of mirror formation was better at every pressure used, and a reduction in the ultimate pressure required was achieved.

It should be noted that in this experimental arrangement the paper was not pre-heated. Heat was supplied to the tin through the paper. Given that the paper was only in contact with the heated roller for ca 100 milliseconds it is quite likely that it never achieved the target temperature of 200°C.

In practice, the holographic roller would need to be heated, and possibly also the crushing roller if used. It would be convenient to use heat to dry the adhesive and this would effectively act as a pre-heat prior to mirroring. Heat could be applied by, for example, by infrared or convection.

After the final rolling operation the deposits consist of a tin layer ~30µm in thickness on average. The metallised areas are typically 0-10µm thicker than the starting paper, and perhaps ~20µm thicker than rolled areas of paper which were not metallised. (The tin tends to fill in the pores/unevenness in the paper and so the final thickness is always less than the sum of the paper and tin thicknesses.)

This compares favourably with intaglio printing, which can cause thickening of the paper in bank notes by, e. g., 50µm.

If the added thickness of the paper proved to be a problem, for example causing difficulties due to uneven stacking, then there are various possible remedies which could be tried. The holograms could be positioned centrally, on both ends, or indeed all around the periphery of the note. Unlike hot-stamped foils the cost of the tin-based holograms is not related to the area they cover, only the total area metallised.

Alternatively, it could be arranged so that during rolling, pressure was only applied to the metallised areas. In this way the thickness of the holograms could be tailored to be virtually the same as the adjacent unrolled paper.

In the final stage, a top, protective coat 30 is provided over the tin particles 31 which are already adhered to the substrate 2 by adhesive 32 (Figure 6).

The principal objectives of top-coating 30 are to prevent mechanical damage to the embossed surface in service, and to prevent copying of the security features.

In the latter context, it is preferable if the adhesive 32 and top-coat 30 are the same or, at least, very similar materials so that any attempt to remove the top-coat would destroy the hologram. It is worth noting that a key advantage of this approach is that the hologram is not contained on a continuous film of material, but as a mosaic of microscopic platelets, Figure 6.

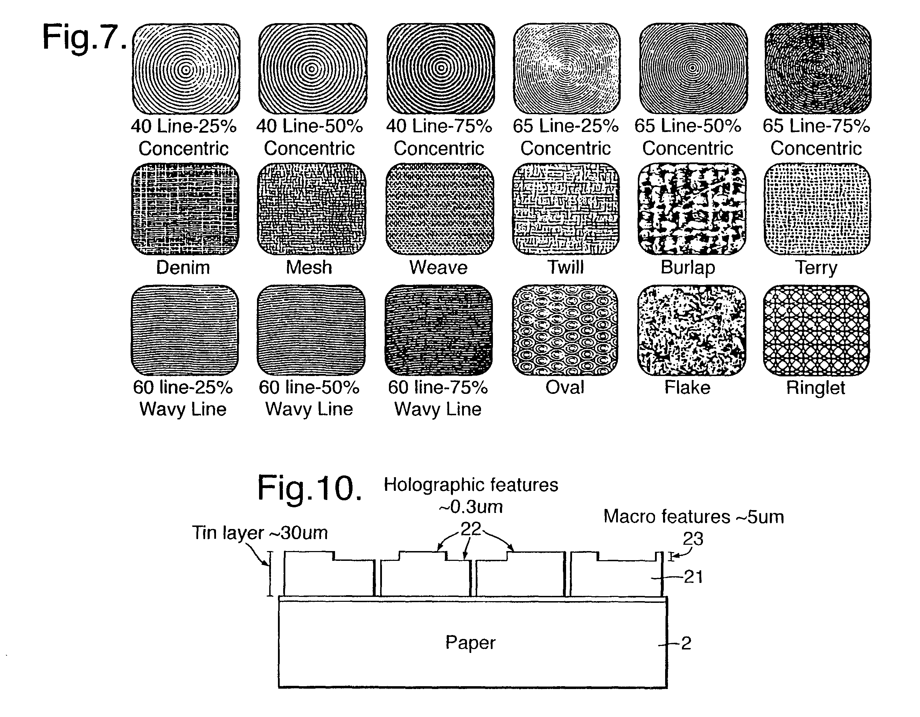

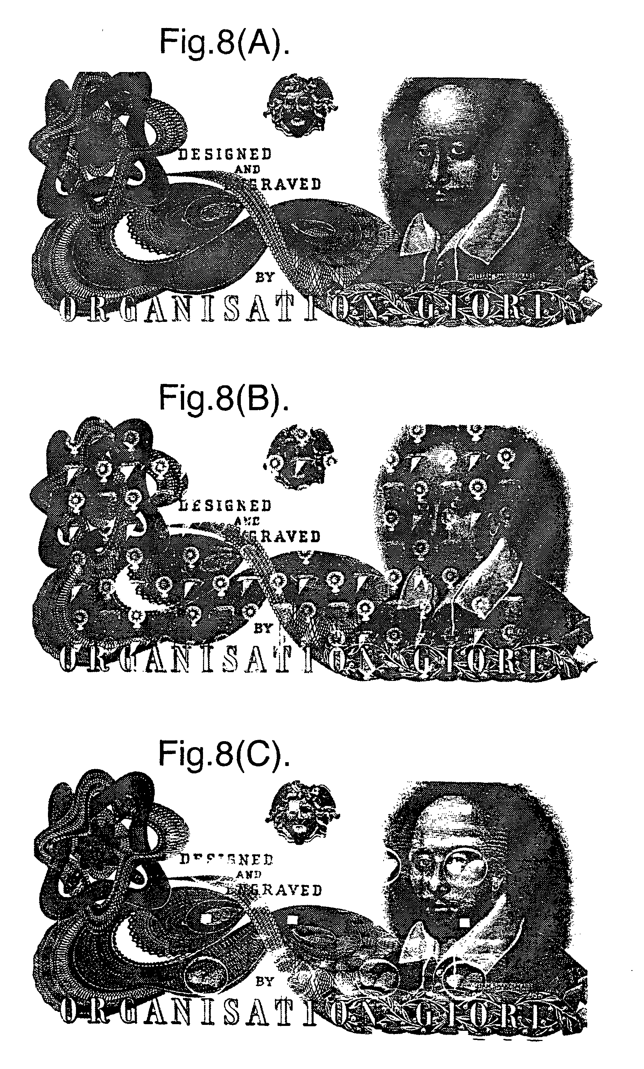

To investigate the resolution of images which can be obtained with this technique, a number of test structures were prepared by photocopying suitable images. The photocopying resins attached to the paper were then remelted and contacted with tin powder and the tin powder was then crushed/polished. Figures 7 and 8 show examples of the results obtained. Images with very encouraging quality were readily obtainable. The lower two examples in Figure 8 were embossed with holograms while the upper example was metallised and not embossed. In the final product the holograms would be designed to complement each of the images.

Half-tone originals produced the best results, because the quality of their reproduction during photocopying was better. A similar approach was also successfully demonstrated by reflowing the resin in laser printed images as well as some intaglio prints.

Inevitably some loss of resolution will occur in this process. For example, if a 20μm dot of adhesive were applied and a 40μm tin particle stuck to it then the particle would overhang at the edges. This is likely to occur to some extent at the edge of any metallised area. It is possible that quite thin metal images can be achieved using dot gain e. g. spreading of the metal on controlled print dimensions, spacings and process conditions.

The particles are then crushed and spread further. For close packed particles this may involve a relatively modest, ~10% increase in area before they impinge on each other and form polyhedral platelets. Particles at the edges of metallised areas are not supported on all sides and have the opportunity to increase in area to a greater extent. Studies of such particles suggest they can increase in area by <50% under normal conditions. This, together with the overhang effect, limits the resolution of the technique to approximately 100μm. It may be possible to improve on this figure slightly by using a low-particle size powder, but as discussed earlier, particles of less than 25μm should be avoided, and this defines the absolute maximum resolution achievable.

The net effect of this is a relatively small loss of resolution and a general darkening of the image as each of the half-tone dots is increased in size. This latter effect could be compensated for by deliberately making the image lighter to start with.

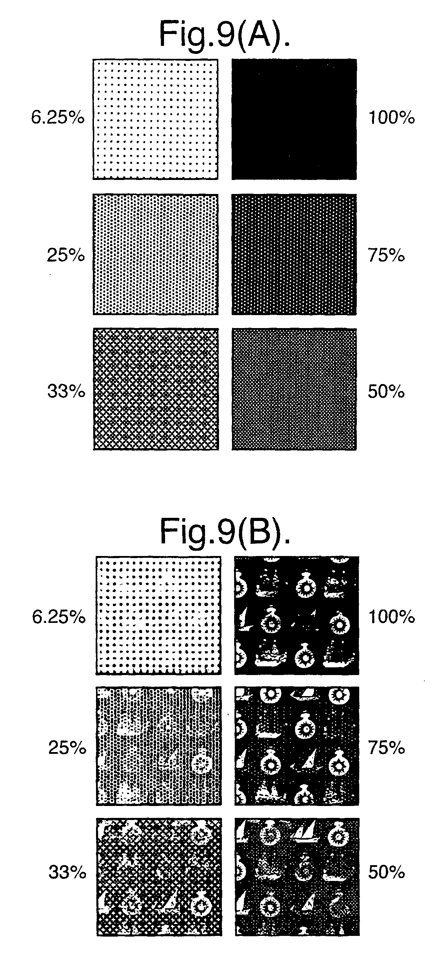

The spreading effect can be usefully employed, however, in reducing the quantity of tin necessary to form holograms. To maximise the magnitude of the effect the adhesive should be applied as an array of lines or dots (with diameters less than 200μm) rather than as a continuous layer. During crushing the tin then spreads to fill in the gaps. A fine dot size maximises the fraction of tin particles in edge sites, and therefore the extent of the spreading effect. Figure 9 shows deposits with progressively lower metal coverage. It can be seen that little loss of image resolution is suffered from original to created holographic effect.

Trials indicated that using very fine arrays of dots (~200μm diameter) virtually complete coverage could be obtained with a starting adhesive coverage of ~60%. Very reasonable results were obtained using a 50% dot coverage. By 40% it was obvious to the naked eye that complete coverage was not being achieved, although the holographic detail was still perfectly clear.

Perhaps the most important factor which controls resolution is application of the adhesive. Clearly, the resolution of the final images will be no better than that of the printed image. The quantity of adhesive applied will also be important: too little and incomplete coverage may occur. Too much may result in it flowing laterally or being displaced by the powder.

Figure 10 illustrates a further process (not shown in Figure 1) in which the embossed metal powder is further macro-embossed. Thus, as seen in Figure 10, the tin layer 21 is micro-embossed with holographic features as shown at 22 and further macro-embossed as shown at 23. For example, by rolling against a cloth it is possible to transfer its surface morphology into the tin layer, such that it takes on the appearance of metallised cloth. This could be important for Brand Protection for fabrics and high quality goods.

In many cases, it is possible to macro-emboss without destroying existing holographic features. Best results are likely to be obtained when the macro-embossed image consists of raised/lowered/tilted flat areas, e.g. line diagrams, Fresnel lenses etc.

## Claims

1. A method of providing an optically variable effect generating structure in the form of a diffraction grating or hologram on a substrate, the method comprising

   a) providing an adhesive on the substrate;
   b) depositing a metal powder on the adhesive; and,
   c) embossing an optically variable effect generating structure into the metal powder.

2. A method according to claim 1, wherein the metal powder is deposited in a discontinuous manner.

3. A method according to claim 1 or claim 2, wherein step (a) comprises providing the adhesive on the substrate in a pattern corresponding to an image.

4.  A method according to claim 1, wherein the adhesive is provided in the form of an array of lines or dots.

5.  A method according to claim 4, wherein the lines or dots are located so as to form a moire pattern when viewed through a similar array.

6.  A method according to claim 4, wherein the dots are in a pattern defining a half-tone image.

7.  A method according to claim 6, wherein the dots have diameters less than 200 μm.

8.  A method according to any of the preceding claims, wherein the adhesive comprises a toner.

9.  A method according to any of claims 1 to 7, wherein step a) comprises printing the adhesive using for example flexographic or intaglio printing.

10. A method according to claim 7, wherein the adhesive covers no more than 60% of the area of the image.

11. A method according to any of the preceding claims, wherein the metal is tin.

12. A method according to any of the preceding claims, wherein the particle size of the metal powder is in the range <0.1 - 100 μm.

13. A method according to any of the preceding claims, wherein the metal powder is dusted on to the adhesive.

14. A method according to any of the preceding claims, wherein step (b) further comprises removing excess metal powder.

15. A method according to claim 14, wherein the removal step comprises one or more of suction, gravity and vibration.

16. A method according to any of the preceding claims, wherein the metal powder is a mixture of different metals.

17. A method according to claim 16, wherein the different metals have different colours.

18. A method according to any of the preceding claims, further comprising magnetic or fluorescent media in one or both of the metal powder and the adhesive.

19. A method according to any of the preceding claims, further comprising oxidising the metal powder.

20. A method according to any of the preceding claims, further comprising subsequent to step (b), crushing the deposited metal powder to form a mirror finish.

21. A method according to claim 20, wherein the crushing step is carried out at the same time as step (c).

22. A method according to any of the preceding claims, wherein the embossing step is carried out using a heated embossing member.

23. A method according to any of the preceding claims, further comprising carrying out a further embossing process after step (c), the embossing pitch being coarser than that used in step (c).

24. A method according to any of the preceding claims, further comprising (d) providing a protective layer over the embossed powder.

25. A method according to claim 24, wherein the protective layer comprises the adhesive used in step (a).

26. A method according to claim 24 or claim 25, wherein the protective layer is printed on to the embossed powder.

27. A method according to any of claims 24 to 26, wherein the protective layer is coloured.

**28.** A method according to any of the preceding claims, wherein the substrate is paper.

**29.** A method according to any of the preceding claims, wherein the finished substrate is a document of value such as a banknote.

**30.** A method according to any of the preceding claims, wherein the steps are carried out in a continuous manner on a substrate in the form of a web so as to provide a plurality of optically variable effect generating structures on the web.

**31.** A substrate carrying an optically variable effect generating structure in the form of a diffraction grating or hologram embossed in a metal powder.

**32.** A substrate according to claim 31, wherein the metal comprises tin.

**33.** A security document such as a banknote including a substrate according to claim 31 or claim 32.


**Patentansprüche**

**1.** Verfahren zur Bildung einer einen optisch veränderbaren Effekt in Form eines Beugungsgitters oder Hologramms auf einem Substrat erzeugenden Struktur,
wobei das Verfahren umfaßt:

    a) das Aufbringen eines Klebstoffs auf dem Substrat,

    b) das Niederschlagen eines Metallpulvers auf dem Klebstoff und

    c) das Einprägen einer einen optisch veränderbaren Effekt erzeugenden Struktur in dem Metallpulver.

**2.** Verfahren nach Anspruch 1, bei dem das Metallpulver diskontinuierlich niedergeschlagen wird.

**3.** Verfahren nach Anspruch 1 oder Anspruch 2, bei dem der Schritt (a) das Aufbringen des Klebstoffs auf dem Substrat in einem einem Bild entsprechenden Muster umfaßt.

**4.** Verfahren nach Anspruch 1, bei dem der Klebstoff in Form einer Anordnung von Linien oder Punkten aufgebracht wird.

**5.** Verfahren nach Anspruch 4, bei dem die Linien oder Punkte so angeordnet werden, daß sie ein Moiré-Muster bilden, wenn sie durch eine ähnliche Anordnung betrachtet werden.

**6.** Verfahren nach Anspruch 4, bei dem die Punkte in einem Muster angeordnet werden, das ein Halbton-Bild bildet.

**7.** Verfahren nach Anspruch 6, bei dem die Punkte Durchmesser aufweisen, die kleiner als $200\,\mu m$ sind.

**8.** Verfahren nach einem der vorstehenden Ansprüche, bei dem der Klebstoff einen Toner aufweist.

**9.** Verfahren nach einem der Ansprüche 1 bis 7, bei dem der Schritt (a) das Drucken des Klebstoffs unter Anwendung beispielsweise eines flexografischen Tiefdruckverfahrens umfaßt.

**10.** Verfahren nach Anspruch 7, bei dem der Klebstoff nicht mehr als 60 % der Bildfläche abdeckt.

**11.** Verfahren nach einem der vorstehenden Ansprüche, bei dem das Metall Zinn ist.

**12.** Verfahren nach einem der vorstehenden Ansprüche, bei dem die Teilchengröße des Metallpulvers im Bereich von < 0,1 - 100 $\mu m$ liegt.

**13.** Verfahren nach einem der vorstehenden Ansprüche, bei dem das Metallpulver auf den Klebstoff aufgestaubt wird.

**14.** Verfahren nach einem der vorstehenden Ansprüche, bei dem der Schritt (b) ferner das Entfernen von überschüssigem Metallpulver umfaßt.

**15.** Verfahren nach Anspruch 14, bei dem das Entfernen des überschüssigen Metallpulvers eins oder mehrere der folgenden Verfahren umfaßt: das Entfernen durch Absaugen, Schwerkraft und Vibration.

**16.** Verfahren nach einem der vorstehenden Ansprüche, bei dem das Metallpulver ein Gemisch aus verschiedenen Metallen ist.

**17.** Verfahren nach Anspruch 16, bei dem die verschiedenen Metalle verschiedene Farben haben.

**18.** Verfahren nach einem der vorstehenden Ansprüche, bei dem das Metallpulver und/oder der Klebstoff ein magnetisches oder fluoreszierendes Mittel aufweist.

**19.** Verfahren nach einem der vorstehenden Ansprüche, daß das Oxidieren des Metallpulvers umfaßt.

**20.** Verfahren nach einem der vorstehenden Ansprüche, bei dem nach dem Schritt (b) das niedergeschlagene Metallpulver zur Bildung einer Spiegelfläche zerquetscht wird.

**21.** Verfahren nach Anspruch 20, bei dem das Zerquetschen gleichzeitig mit dem Schritt (c) ausgeführt wird.

**22.** Verfahren nach einem der vorstehenden Ansprüche, bei dem das Prägen mittels eines erhitzten Prägeelements ausgeführt wird.

**23.** Verfahren nach einem der vorstehenden Ansprüche, bei dem nach dem Schritt (c) ein weiterer Prägeprozess ausgeführt wird und die Prägungsteilung gröber als im Schritt (c) ist.

**24.** Verfahren nach einem der vorstehenden Ansprüche, bei dem ferner (d) eine Schutzschicht über dem geprägten Pulver ausgebildet wird.

**25.** Verfahren nach Anspruch 24, bei dem die Schutzschicht den im Schritt (a) benutzten Klebstoff aufweist.

**26.** Verfahren nach Anspruch 24 oder Anspruch 25, bei dem die Schutzschicht auf das geprägte Pulver gedruckt wird.

**27.** Verfahren nach einem der Ansprüche 24 bis 26, bei dem die Schutzschicht farbig ist.

**28.** Verfahren nach einem der vorstehenden Ansprüche, bei dem das Substrat Papier ist.

**29.** Verfahren nach einem der vorstehenden Ansprüche, bei dem das oberflächenbehandelte Substrat ein Wertdokument, z. B. eine Banknote, ist.

**30.** Verfahren nach einem der vorstehenden Ansprüche, bei dem die Verfahrensschritte in kontinuierlicher Weise auf einem Substrat in Form einer Materialbahn ausgeführt werden, so daß eine Vielzahl einen optisch veränderbaren Effekt erzeugender Strukturen auf der Materialbahn ausgebildet wird.

**31.** Substrat, das eine einen optisch veränderbaren Effekt erzeugende Struktur in Form eines Beugungsgitters oder Hologramms trägt, das in ein Metallpulver geprägt ist.

**32.** Substrat nach Anspruch 31, bei dem das Metall Zinn aufweist.

**33.** Sicherheitsdokument, z. B. Banknote, mit einem Substrat nach Anspruch 31 oder Anspruch 32.

**Revendications**

**1.** Procédé d'obtention d'une structure qui crée un effet optique variable et qui présente la forme d'une grille de diffraction ou d'un hologramme sur un substrat, le procédé comprenant les étapes qui consistent à :

a) appliquer un adhésif sur le substrat,

b) déposer une poudre métallique sur l'adhésif et

c) gaufrer dans la poudre métallique une structure qui crée un effet optique variable.

**2.** Procédé selon la revendication 1, dans lequel la poudre métallique est déposée de manière continue.

**3.** Procédé selon la revendication 1 ou la revendication 2, dans lequel l'étape (a) comprend l'application de l'adhésif sur le substrat suivant un motif qui correspond à une image.

**4.** Procédé selon la revendication 1, dans lequel l'adhésif est appliqué sous la forme d'une série de lignes ou de points.

**5.** Procédé selon la revendication 4, dans lequel les lignes ou les points sont disposés de manière à former un motif moiré lorsqu'on les regarde à travers une série similaire.

**6.** Procédé selon la revendication 4, dans lequel les points sont disposés suivant un motif qui définit une image en demi-teintes.

**7.** Procédé selon la revendication 6, dans lequel les points ont un diamètre inférieur à 200 $\mu$m.

**8.** Procédé selon l'une quelconque des revendications précédentes, dans lequel l'adhésif contient un toner.

**9.** Procédé selon l'une quelconque des revendications 1 à 7, dans lequel l'étape (a) comprend l'impression de l'adhésif par exemple par recours à une impression flexographique ou une impression en intaille.

**10.** Procédé selon la revendication 7, dans lequel l'adhésif ne couvre pas plus de 60 % de la surface de l'image.

**11.** Procédé selon l'une quelconque des revendications précédentes, dans lequel le métal est l'étain.

**12.** Procédé selon l'une quelconque des revendications précédentes, dans lequel les particules de poudre métallique ont une taille comprise entre <0,1 et 100 $\mu$m.

**13.** Procédé selon l'une quelconque des revendications précédentes, dans lequel la poudre métallique est dispersée sur l'adhésif.

**14.** l'étape (b) comprend en outre l'enlèvement de la poudre métallique en excès.

**15.** Procédé selon la revendication 14, dans lequel l'étape d'enlèvement recourt à une succion, à la gravité ou à des vibrations.

**16.** Procédé selon l'une quelconque des revendications précédentes, dans lequel la poudre métallique est un mélange de différents métaux.

**17.** Procédé selon la revendication 16, dans lequel les différents métaux ont différentes couleurs.

**18.** Procédé selon l'une quelconque des revendications précédentes, qui comprend en outre des supports magnétiques ou fluorescents dans la poudre métallique ou dans l'adhésif.

**19.** Procédé selon l'une quelconque des revendications précédentes, qui comprend en outre l'oxydation de la poudre métallique.

**20.** Procédé selon l'une quelconque des revendications précédentes, qui comprend en outre, après l'étape (b), l'écrasement de la poudre métallique pour former un fini miroir.

**21.** Procédé selon la revendication 20, dans lequel l'étape d'écrasement est exécutée en même temps que l'étape (c).

**22.** Procédé selon l'une quelconque des revendications précédentes, dans lequel l'étape d'impression est réalisée en recourant à un élément de gaufrage chauffé.

**23.** Procédé selon l'une quelconque des revendications précédentes, qui comprend en outre, après l'étape (c), une étape supplémentaire de gaufrage dont le pas de gaufrage est plus grand que celui qui est utilisé dans l'étape (c).

**24.** Procédé selon l'une quelconque des revendications précédentes, qui comprend en outre l'étape (d) qui consiste à appliquer une couche de protection au-dessus de la poudre gaufrée.

**25.** Procédé selon la revendication 24, dans lequel la couche de protection contient l'adhésif utilisé à l'étape (a).

**26.** Procédé selon la revendication 24 ou la revendication 25, dans lequel la couche de protection est imprimée sur la poudre gaufrée.

**27.** Procédé selon l'une quelconque des revendications 24 à 26, dans lequel la couche de protection est colorée.

**28.** Procédé selon l'une quelconque des revendications précédentes, dans lequel le substrat est du papier.

**29.** Procédé selon l'une quelconque des revendications précédentes, dans lequel le substrat terminé est un document de valeur, par exemple un billet de banque.

**30.** Procédé selon l'une quelconque des revendications précédentes, dont les étapes sont exécutées en continu sur un substrat qui présente la forme d'une bande, de manière à appliquer sur la bande une pluralité de structures qui créent un effet optique variable.

**31.** Substrat doté d'une structure qui crée un effet optique variable et qui présente la forme d'une grille de diffraction ou d'un hologramme gaufrés dans une poudre métallique.

**32.** Substrat selon la revendication 31, dans lequel le métal contient de l'étain.

**33.** Document sécurisé, notamment billet de banque, qui comprend un substrat selon la revendication 31 ou la revendication 32.

Fig.1.

# Fig.2(A).

# Fig.2(B).

## Fig.3(A).

## Fig.3(B).

# Fig.4.

# Fig.5.

# Fig.6.

Fig.7.

| | | | | | |
|---|---|---|---|---|---|
| 40 Line-25% Concentric | 40 Line-50% Concentric | 40 Line-75% Concentric | 65 Line-25% Concentric | 65 Line-50% Concentric | 65 Line-75% Concentric |
| Denim | Mesh | Weave | Twill | Burlap | Terry |
| 60 line-25% Wavy Line | 60 line-50% Wavy Line | 60 line-75% Wavy Line | Oval | Flake | Ringlet |

Fig.10.

Holographic features ~0.3um

Macro features ~5um

Tin layer ~30um

Paper

22
23
21
2

## Fig.8(A).

## Fig.8(B).

## Fig.8(C).

# Fig.9(A).

6.25%          100%

25%            75%

33%            50%

# Fig.9(B).

6.25%          100%

25%            75%

33%            50%